# EUROPEAN PATENT APPLICATION

(11) **EP 4 559 759 A1**
(43) Date of publication of application: **28.05.2025**
(21) Application number: 24214425.1
(22) Date of filing: 21.11.2024
(51) Int. Cl.: B60R 13/02

(54) **VEHICLE TRIM RETENTION**

(30) Priority: 23.11.2023 GB 202317916
(71) Applicant: Nissan Motor Manufacturing (UK) Limited, Cranfield, Bedfordshire MK43 0DB (GB)
(72) Inventor: Champaneri, Bhavesh, Cranfield, MK430DB (GB); Baker, Daniel, Cranfield, MK430DB (GB)

(57) **Abstract**

A trim assembly 100 for a vehicle comprises a trim fixture 130 which has an anchor 140 for engaging with an anchor bracket 109 of a dashboard 110, and an elongate flexible member 150 for looping around an appendage 122 of an air vent surround (120, Fig. 3). The appendage 122 comprises a projecting tab comprising an appendage aperture 123 adapted such that the elongate flexible member 150 can pass therethrough and be looped around before engaging with an aperture 151 in the trim fixture. Trim fixture 130 comprises a base 131 from which the anchor 140 and elongate flexible member 150 both project. The trim fixture 130 is engaged with the vent surround 120 by looping elongate flexible member 150; the vent surround 120 is mounted to the dashboard 110; and the trim fixture 130 is engaged with the dashboard 110 using anchor 140.

## Description

### Technical Field of the Invention

The present invention relates to retention of vehicle trim elements in position in use. In particular, the present invention relates to retention of trim elements in place in response to impact events or the like.

### Background to the Invention

The interior of a vehicle typically includes numerous trim elements. These trim elements can be purely decorative, purely functional, or have both decorative and functional purposes. Often, trim is made up of both a core trim element such as a dashboard, door panel, roof panel or the like; and one or more ancillary trim elements mounted to the core element. Examples of ancillary trim elements might include air vents, air vent surrounds, switches, decorative rims or plates around groups of switches, displays, or other controls or the like. The ancillary trim elements may be mounted using mounting formations which can include corresponding features of the primary trim element and of the ancillary trim element. Typical mounting formations include, but are not limited to: snap fitting elements, friction fitting elements, bolts/screws and corresponding bores or the like. In many instances it may be difficult in practice to implement certain types of mounting features, in particular screws/bolts or the like, as there is little space to access the features when mounting the ancillary trim features.

Often, ancillary trim elements are designed to be removable so that if they are damaged either by an adverse event or by normal wear and tear, they can be replaced; and/or so that they permit access to otherwise enclosed vehicle systems for repair and maintenance purposes. Whether as a consequence of being removable, the type of mounting feature, or otherwise, some ancillary trim elements may be susceptible to becoming loose or detached from their mountings. This may occur due to wear and tear over time. Alternatively, this may occur more suddenly in response to an impact event, such as a vehicle collision. This may be caused directly by the acceleration/deceleration of the impact and/or from temporary or permanent deformation of the core trim element on which the ancillary trim element is mounted. Either circumstance can lead to the ancillary trim element or the core trim element becoming damaged, which is not desirable.

It is therefore an object of the present invention to provide for mounting of ancillary trim elements to core trim elements that at least partly overcomes or alleviates the above issues.

### Summary of the Invention

According to a first aspect of the present invention, there is provided a vehicle trim assembly comprising a core trim element, an ancillary trim element mounted to the core trim element, and a trim fixture comprising: an anchor for engaging with the core trim element, and an elongate flexible member for being looped around an appendage of the ancillary trim element and inserted into and thereby engaged with an aperture in the trim fixture; wherein the appendage of the ancillary trim element comprises a projecting tab comprising an appendage aperture adapted such that the elongate flexible member can pass therethrough.

A trim assembly comprising the above trim fixture is a simple and convenient way of improving retention of ancillary trim elements. A trim assembly comprising a trim fixture of this type can be readily used even in locations where there is little space. For instance, the elongate flexible member can be looped around the appendage of the ancillary trim element and tightened as required before the ancillary trim element is mounted, and the anchor is then engaged with the core trim element. Alternatively, the anchor can be engaged prior to mounting the ancillary trim element and it is then relatively simple to loop the elongate flexible member around the appendage of the ancillary trim element and tighten as required.

The appendage aperture may define a bar at the distal end of the projecting tab around which the elongate flexible member can be looped. The anchor may comprise a base and a stem which extends away from the base. The stem may comprise one or more branch projections. Such branch projections may be provided on a single side of the stem or on multiple sides of the stem. Providing branch projections on more than one side of the stem can help engagement with the core trim element. The branch projections may each be angled outwardly from the stem and toward the base. In this manner, the stem may be readily introduced into an aperture of corresponding size; but will resist removal from said aperture.

In some embodiments, the stem may have a sloped or domed tip. This can ease engagement with the core trim element.

The loop formed by the elongate flexible member may be tightened by inserting the elongate flexible member further through the aperture in the trim fixture. The elongate flexible member may be cut close to the aperture in the trim fixture.

The elongate flexible member may project from the base of the anchor or from a place adjacent to the base of the anchor. The elongate flexible member may comprise a series of ratchet projections. Such ratchet projections may be provided on a single side of the elongate flexible member, or on multiple sides of the elongate flexible member. Providing ratchet projections on more than one side of the elongate flexible member can help engagement with the aperture in the trim fixture. The ratchet projections may each comprise a relatively steeply sloped surface at an end of the ratchet projection closer to the base, and a relatively shallowly sloped surface at an opposing end of the ratchet projection.

In some embodiments, the elongate flexible member may have a sloped or domed tip. This can ease engagement with the aperture.

The aperture in the trim fixture may comprise part of; or be formed adjacent to; the base of the flexible member. The dimensions of the aperture in the trim fixture may be adapted to correspond to the dimensions of the elongate flexible member and ratchet projections so as to enable insertion (and further insertion in the same direction) of the flexible member into the aperture in the trim fixture; but to resist removal. In some embodiments, the aperture in the trim fixture may have an internal ratchet profile comprising one or more ratchet projections.

The core trim element may comprise an anchor bracket for engaging with the anchor of the trim fixture. The anchor bracket may comprise an anchor aperture of corresponding size to the anchor stem. The anchor bracket may be an integral part of the internal structure of the core trim element. Alternatively, the anchor bracket may be a distinct component fitted to the internal structure of the core trim element.

The anchor bracket may be orientated at any suitable angle with respect to the core trim element. In a preferred embodiment, the anchor bracket is oriented such that the anchor aperture has a through axis parallel or substantially parallel to a face of the core trim element which faces the vehicle occupants. This is beneficial as it orientates the anchor stem perpendicular or substantially perpendicular to the surface of the core trim element (typically an end face of the core element) into which the anchor is inserted. Such an orientation of the anchor bracket may be substantially perpendicular to the direction of insertion of the ancillary trim element into the primary mounting and/or perpendicular to an anticipated maximum potential impact event deceleration vector. Surprisingly, it has been found that the stem is stable under higher loads applied perpendicular to the stem axis than under loads applied parallel to the stem axis. This also applies where there is a difference in material hardness between the stem and the anchor bracket, including when the stem is of a softer material than the anchor bracket.

The base may be provided with a spacer projecting away from the base in the same orientation as the stem. The spacer may beneficially prevent the anchor being inserted too far into the anchor aperture. The spacer may have a substantially truncated cone form with a narrow end adjacent to the base and to the junction between base and stem.

In some embodiments, the anchor bracket is part of the core trim element. In other embodiments, the anchor bracket is mounted on the core trim element; or on another component to which the core trim element is mounted.

In some embodiments, the ancillary trim element is mounted to the core trim element via primary mounting formations, and the trim fixture is used as an additional mounting formation. In some embodiments, the anchor bracket may additionally comprise part of the primary mounting formations. In some embodiments, the appendage may additionally comprise part of the primary mounting formations.

The primary mounting formations may comprise any suitable corresponding features. Suitable corresponding features include, but are not limited to: snap fitting elements, friction fitting elements, bolts/screws and corresponding bores or the like.

The trim fixture and/or primary mounting formations may be operable to retain the ancillary trim element in a fixed position relative to the core trim element. In other embodiments, the trim fixture and/or primary mounting formations may be operable to allow a predetermined range of movement between the ancillary trim element and the core trim element. This can beneficially facilitate redirection of air vents, actuation of switches, or the like.

The trim fixture may be formed from any suitable material. In particular, the trim fixture may be formed from a suitable plastic material. Suitable plastic materials may include but are not limited to polyacetal (POM), polyamide (PA), or nylon.

The core trim element may be an interior trim panel or the like. The interior trim panel may be a dashboard, a door panel, a roof panel, side trim panels, pillar trims (A, B, or C pillars), or the like.

The ancillary trim element may include; but is not limited to; any one or more of: an air vent, an air vent surround, a switch, a decorative rim, a screen, a decorative plate, a surrounding panel for a switch or door handle, or the like.

According to a second aspect of the present invention, there is provided a method of constructing a vehicle trim assembly comprising a core trim element and an ancillary trim element mounted to the core trim element, and a trim fixture comprising an anchor and an elongate flexible member, the elongate flexible member being arranged for looping around an appendage of the ancillary trim element and for inserting into and thereby engaging with an aperture in the trim fixture, the method comprising the steps of:
a. looping the elongate flexible member around an appendage of the ancillary trim element and inserting the elongate flexible member into the aperture in the trim fixture;
b. mounting the ancillary trim element to the core trim element;
c. engaging the anchor with an anchor bracket provided on the core trim element; and
d. tightening the elongate flexible member around the appendage.

The method of the second aspect of the present invention may incorporate any or all features of the assembly of the first aspect of the present invention, as desired or required.

Mounting the ancillary trim element may be achieved by use of primary mounting formations provided on either or both of the core trim element and the ancillary trim element.

The tightening of the elongate flexible member around the appendage can be achieved by further inserting the elongate flexible member through the aperture in the trim fixture. The method may contain the additional step of cutting the elongate flexible member after tightening. The cut may be made close to the aperture in the trim fixture.

Depending upon the nature of the core trim element, the ancillary trim element, and of access to the core trim element and/or the ancillary trim element during mounting, the steps (a), (b), (c) and (d) may be carried out in different orders. For the avoidance of doubt, the steps may be carried out in any of the following orders:
(a), (b), (c), (d);
(a), (c), (b), (d);
(b), (a), (c), (d);
(b), (c), (a), (d);
(c), (a), (d), (b); or
(c), (b), (a), (d).

According to a third aspect of the present invention there is provided a vehicle comprising one or more trim assemblies according to the first aspect of the present invention and/or one or more trim assemblies assembled according to the method of the second aspect of the present invention.

### Detailed Description of the Invention

In order that the invention may be more clearly understood, one or more embodiments thereof will now be described, by way of example only, with reference to the accompanying drawings, of which:
- Figure 1: is an illustrative view of an exemplary vehicle in which a vehicle trim assembly according to the present invention could be used;
- Figure 2: is an illustrative view of an exemplary vehicle interior including numerous trim elements which may comprise vehicle trim assemblies according to the present invention;
- Figure 3: is a side view of a vehicle trim assembly according to the present invention comprising an ancillary trim element in the form of an air vent surround attached at an edge of a core trim element comprising a dashboard, using a trim fixture;
- Figure 4: is an expanded view of part of the vehicle trim assembly of Figure 3;
- Figure 5: is an illustrative view of the air vent surround and the trim fixture, in the absence of the dashboard; and
- Figure 6: is a cross-sectional view illustrating the engagement of the trim fixture to the dashboard and to the air vent surround.

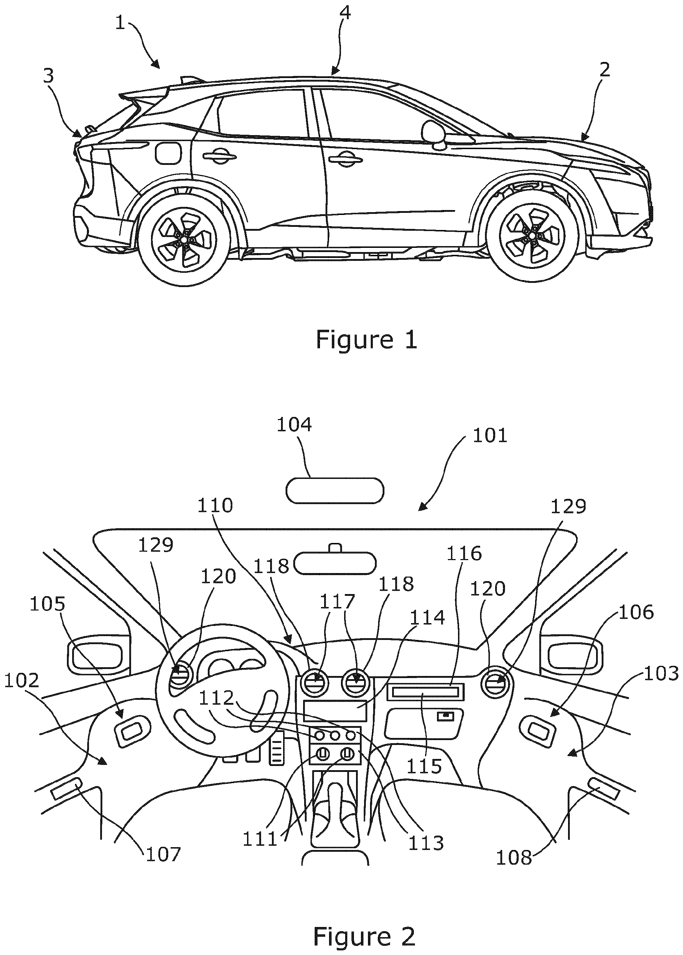

Turning now to Figure 1, an illustrative view of a vehicle 1 is shown. As illustrated, the vehicle 1 comprises a front underbonnet compartment 2, which may comprise an engine and/or storage, a trunk compartment 3, typically comprising storage, and a passenger compartment 4. The trunk compartment 3, passenger compartment 4 and any storage within the bonnet compartment 2 may include trim elements, which may be decorative and/or functional. Turning to Figure 2, an illustrative view of the interior of passenger compartment 4 looking forward is shown. As illustrated the passenger compartment 4 comprises various core trim elements such as roof panel 101, door panels 102, 103, and dashboard 110. The passenger compartment 4 further comprises various ancillary trim elements mounted on the core trim elements such as interior lamp unit 104 mounted to the roof panel 101; as well as door handles 105, 106, and electric window control switches 107, 108 mounted to each door panel 102, 103.

In this example, the dashboard 110 has multiple ancillary trim elements such as: rotary switches 111, push switches 112, switch back panels 113, screen 114, decorative panel 115, decorative rim 116, centre air vents 117, centre air vent surrounds 118, side air vents 129, and side air vent surrounds 120. These ancillary trim elements 104-108, 111-118, 120, 129 can be mounted in position by means of primary mounting elements (of any suitable form known in the art). In the present invention, any one or more of these ancillary trim elements 104-108, 111-118, 120, 129 can be additionally or alternatively secured to the dashboard 110 (or other core trim element) by use of a trim fixture 130 (not shown in Figure 2) to form a trim assembly 100 as claimed in the present invention. This helps retain the ancillary trim element 104-108, 111-118, 120, 129 in position in the event of an impact event or the like.

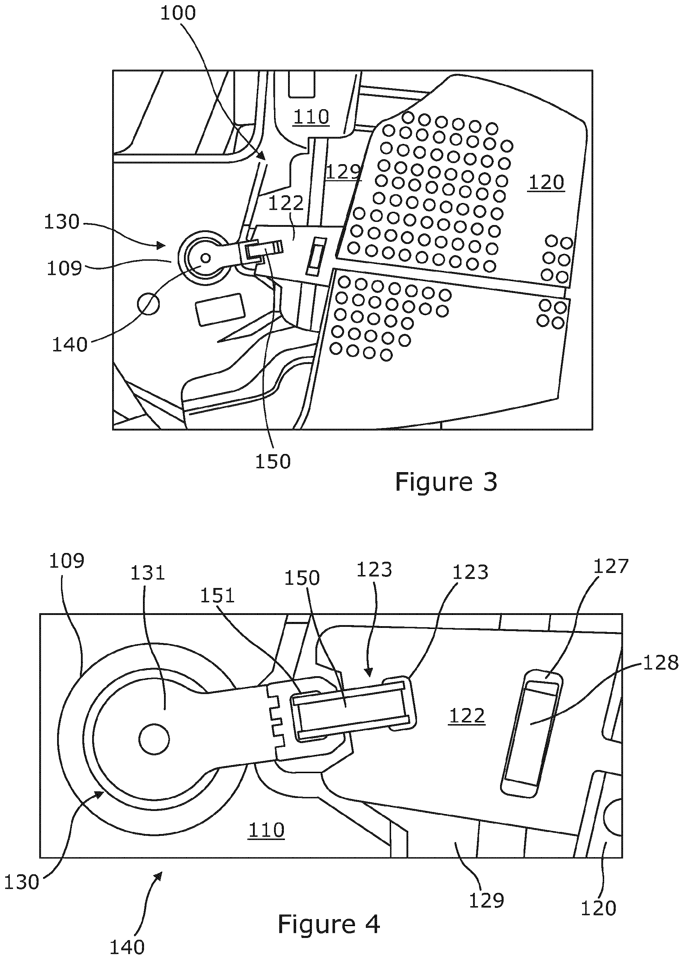

An example of a trim assembly 100 of the present invention is shown in Figures 3-6. In this example, the trim assembly 100 provides for secure retention of an ancillary trim element 120 in the form of a side air vent surround to a core trim element in the form of a dashboard 110. The skilled person will be aware that the trim assembly 100 described in this example could be readily adapted to secure other ancillary trim elements to other core trim elements.

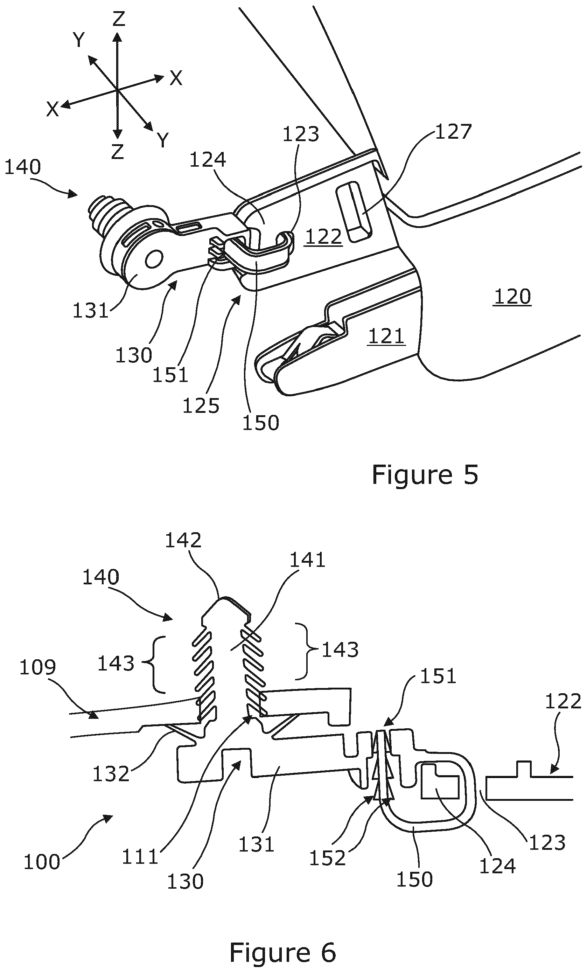

Turning back to Figure 2, the side air vent surround 120 is adjacent to the door panel 102,103 when the vehicle door is secured. The air vent surround 120 is mounted to the dashboard 110 by use of primary mounting formations, such as male element 121 (shown in Figure 5) which can fit into and engage with a corresponding female element (not shown) on dashboard 110. In view of the limited space to work in, there are relatively few options for primary mounting foundations that enable the air vent surround 120 to be both easily and securely mounted. Accordingly, there is a possibility that the air vent surround 120 may become loose or detached over time or following an impact event.

In the present invention, as shown most clearly in Figures 5 and 6, the trim assembly 100 comprises trim fixture 130 which has an anchor 140 for engaging with the dashboard 110, and an elongate flexible member 150 for looping around an appendage 122 of the air vent surround 120. In this example, the appendage 122 comprises a projecting tab comprising an appendage aperture 123 adapted such that the elongate flexible member 150 can pass therethrough. The appendage aperture 123 defines a bar 124 at the distal end 125 of the projecting tab around which the elongate flexible member 150 can be looped before engaging with an aperture 151 in the trim fixture.

As shown in Figures 3 and 4, the appendage 122 may also be fitted with an aperture 127 operable to receive, in use, a locating tab 128 of an air vent 129. This helps align the air vent surround 120 with the air vent 129.

The trim fixture 130 comprises a base 131 from which the anchor 140 and elongate flexible member 150 both project. In this example, the aperture 151 in the trim fixture is also formed as part of base 131, but the skilled person will appreciate that it could be formed as a separate component attached to or connected to base 131.

The anchor 140 comprises a stem 141 which extends away from the base 131 to a sloped or domed tip 142. The stem 140 is provided with one or more branch projections 143 to aid engagement with a corresponding anchor aperture 111 provided on an anchor bracket 109 in the dashboard 110. As shown in this example, the anchor bracket 109 is essentially an integral wall within the supporting structure of the dashboard 110. The skilled person will appreciate that a separate anchor bracket 109 could be fitted in alternative embodiments.

The branch projections 143 are each angled outwardly from the stem 140 and toward the base 131. This configuration may be referred to as a `fir tree' configuration in the art. In this manner, the stem 141 may be readily inserted, tip 142 first, into the anchor aperture 111. During insertion, the branch projections 143 are each urged toward the stem 141 enabling further insertion. Nevertheless, the stem 141 will resist removal from said anchor aperture 111 once inserted, as the branch projections 143 will be urged away from the stem 141 by interaction with the aperture 111.

In this example, the anchor bracket 109 is orientated such that the anchor aperture 111 has a through axis parallel or substantially parallel to a surface of the dashboard 110 facing the vehicle seating area, local to the air vent surround 120. This orientates the stem 141 of the trim fixture parallel or substantially parallel to this surface (or at least to part of this surface) of the dashboard 110 (which would be parallel to the vehicle transverse axis Y-Y in Figure 5); and substantially transverse to the longitudinal axis (X-X in Figure 5) of the vehicle 1. The stem 141 is therefore substantially perpendicular to the direction of the anticipated maximum potential impact event deceleration vector (for instance a head on vehicle collision). Surprisingly, it has been found that while a stem 141 of a `fir tree' configuration is designed to resist axial loads, the stem 141 is even more stable under higher transverse loads than under axial loads. This still applies where the stem 141 is formed of a softer material than the anchor bracket 109.

As shown in Figure 6, the base 131 may optionally comprise a spacer 132. As shown in this example, the spacer 132 projects away from the base 131. The spacer 132 may have a truncated cone form as shown in cross-section in the example of Figure 6. The spacer 132 helps prevent the anchor 140 being inserted too far into the anchor aperture 111.

The elongate flexible member 150 has a ratchet profile comprising a series of ratchet projections 152 (Figure 6) on opposing sides of the elongate flexible member 150. As shown in this example, the ratchet projections 152 each comprise a relatively steeply sloped surface at an end of the ratchet projection 152 closer to the base 131 and a relatively shallowly sloped surface at an opposing end of the ratchet projection 152. The skilled person will appreciate that other forms of ratchet projection 152 may be provided on a single side or on multiple sides of the elongate flexible member 150 in alternative embodiments. As such, the shallow sloped surfaces of each ratchet projection 152 facilitate insertion of the elongate flexible member 150 into aperture 151. Subsequent removal is resisted by the more steeply sloped ends engaging with the edges of the aperture 151. In some embodiments, the aperture 151 in the trim fixture can additionally or alternatively be provided with internal ratchet projections (not shown) to increase engagement between the elongate flexible member 150 and the aperture 151 in the trim fixture.

As is shown in Figure 6, the elongate flexible member 150 does not extend significantly beyond the aperture 151. Whilst the skilled person will appreciate that an elongate flexible member of this length can be provided, more typically, a longer elongate flexible member 150 will be provided. This longer elongate flexible member 150 can be tightened around the bar 124 by inserting it further through the aperture 151 in the trim fixture. It can subsequently be cut close to the aperture 151 in the trim fixture. This has the benefit that any excess length of the elongate flexible member 150 is not left in situ and thus cannot potentially adversely interact with any other components after the air vent surround 120 is mounted.

In order to construct the vehicle trim assembly 100, the core trim element 110 is first fitted to the vehicle as is known from the prior art. Then, the trim fixture 130 is engaged with the ancillary trim element 120 by looping elongate flexible member 150; the ancillary trim element 120 is mounted to the core trim element 110; and the trim fixture 130 is engaged with the core trim element 110 using anchor 140. The skilled person will appreciate that the order of these particular steps may vary depending upon the nature of the core and ancillary trim elements 110, 120; and especially the space or access to these core and ancillary trim elements 110, 120 during mounting.

One possible example of construction method for the vehicle trim assembly 100 of the present invention is described in more detail below. In this example, the elongate flexible member 150 is first looped around the bar of the ancillary trim element 120 and then inserted into the aperture 151 in the trim fixture. At this stage, the elongate member 150 continues to be inserted into the aperture 151 in the trim fixture until it is tightly looped around the bar 124. Optionally, at this stage, the elongate flexible member 150 can be cut close to the aperture 151 in the trim fixture.

Once the elongate flexible member 150 is suitably engaged with the aperture 151 in the trim fixture, the ancillary trim element 120 is mounted to the core trim element 110, using the male element 121 or other such mounting formations. The anchor 140 is then inserted into the anchor aperture 111.

The one or more embodiments are described above by way of example only. Many variations are possible without departing from the scope of protection afforded by the appended claims.

## Claims

1. A vehicle trim assembly (100) comprising a core trim element (110), an ancillary trim element (120) mounted to the core trim element, and a trim fixture (130) comprising an anchor (140) for engaging with the core trim element (110) and an elongate flexible member (150) for being looped around an appendage (122) of the ancillary trim element (120) and inserted into and thereby engaged with an aperture (151) in the trim fixture (130), wherein the appendage (122) of the ancillary trim element (120) comprises a projecting tab comprising an appendage aperture (123) adapted such that the elongate flexible member (150) can pass therethrough.

2. A vehicle trim assembly (100) as claimed in claim 1, wherein the appendage aperture (123) defines a bar (124) at the distal end of the projecting tab around which the elongate flexible member (150) can be looped.

3. A vehicle trim assembly (100) as claimed in claim 1 or claim 2, wherein the anchor (140) comprises a base (131); and a stem (141) which extends away from the base.

4. A vehicle trim assembly (100) as claimed in claim 3, wherein the stem (141) comprises one or more branch projections (143) on a single side of the stem or on multiple sides of the stem.

5. A vehicle trim assembly (100) as claimed in claim 4, wherein the branch projections (143) are each angled outwardly from the stem (141) and towards the base (131).

6. A vehicle trim assembly (100) as claimed in any one of claims 3 to 5, wherein the elongate flexible member (150) projects from the base (131) of the anchor (140), or from a point adjacent to the base (131) of the anchor.

7. A vehicle trim assembly (100) as claimed in any preceding claim, wherein the elongate flexible member (150) comprises a series of ratchet projections (152) provided on a single side of the elongate flexible member; or on multiple sides of the elongate flexible member.

8. A vehicle trim assembly (100) as claimed in claim 7, wherein the dimensions of the aperture (151) in the trim fixture (130) are adapted to correspond to the dimensions of the elongate flexible member (150) and ratchet projections (152) so as to enable insertion (and further insertion in the same direction) of the flexible member (150) into the aperture (151) in the trim fixture (130), but to resist removal.

9. A vehicle trim assembly (100) as claimed in any preceding claim, wherein the core trim element (110) comprises an anchor bracket (109) for engaging with the anchor (140) of the trim fixture (130).

10. A vehicle trim assembly (100) as claimed in claim 9, wherein the anchor bracket (109) is oriented such that an anchor aperture (111) has a through axis parallel or substantially parallel to a surface (or at least part of a surface) of the core trim element (110).

11. A vehicle trim assembly (100) as claimed in any preceding claim, wherein the ancillary trim element (120) is mounted to the core trim element (110) via primary mounting formations (121) and the trim fixture (130) is used as an additional mounting formation.

12. A vehicle trim assembly (100) as claimed in any preceding claim, wherein the core trim element (110) is a dashboard, a door panel (102, 103), or a roof panel (101), a side trim panel, or a roof pillar trim panel.

13. A vehicle trim assembly (100) as claimed in any preceding claim, wherein the ancillary trim element (120) is any one of: an air vent (117, 129), an air vent surround (118, 120), a switch (112), a decorative rim (116), a screen (114), a switch or screen surround, or a decorative plate (115).

14. A method of constructing a vehicle trim assembly (100) comprising a core trim element (110) and an ancillary trim element (120) mounted to the core trim element, the ancillary trim element comprising an appendage (122) with a projecting tab comprising an appendage aperture (123); and a trim fixture (130) comprising an anchor (140) and an elongate flexible member, the elongate flexible member (150) being arranged for looping around the appendage (122) of the ancillary trim element (120) and through the appendage aperture (123) therein, and for inserting into and thereby engaging with an aperture (151) in the trim fixture (130), the method comprising the steps of:
(a) looping the elongate flexible member (150) through an aperture (123) in an appendage (122) of the ancillary trim element (120) and inserting the elongate flexible member into the aperture (151) in the trim fixture (130);
(b) mounting the ancillary trim element (120) to the core trim element (110);
(c) engaging the anchor (140) with an anchor bracket (109) provided on the core trim element; and
(d) tightening the elongate flexible member (150) around the appendage (122).

15. A method as claimed in claim 14, wherein mounting the ancillary trim element (120) is achieved by use of primary mounting formations (121) provided on either or both of the core trim element (110) and the ancillary trim element (120).

16. A vehicle comprising one or more trim assemblies (100) according to any one of claims 1 to 13, and/or one or more trim assemblies (100) constructed according to the method of any one of claims 14 or 15.
